# EUROPÄISCHE PATENTSCHRIFT

(11) **EP 4 229 704 B1**
(45) Veröffentlichungstag und Bekanntmachung des Hinweises auf die Patenterteilung: **23.04.2025**
(21) Anmeldenummer: 22822959.7
(22) Anmeldetag: 28.11.2022
(51) Int. Cl.: H01M 10/0525, H01M 10/658, H01M 10/659

(54) **PROPAGATIONSBARRIERE MIT VERSTÄRKENDEM FÜLLMATERIAL UND VERFAHREN ZU DEREN HERSTELLUNG**
PROPAGATION BARRIER HAVING REINFORCING FILLER MATERIAL AND METHOD FOR THE PRODUCTION THEREOF
BARRIÈRE DE PROPAGATION À CHARGE DE RENFORCEMENT ET SON PROCÉDÉ DE FABRICATION

(30) Priorität: 29.11.2021 DE 102021131311
(43) Veröffentlichungstag der Anmeldung: 23.08.2023
(73) Patentinhaber: Zentrum für Sonnenenergie- und Wasserstoff-Forschung Baden-Württemberg Gemeinnützige Stiftung, 70563 Stuttgart (DE)
(72) Erfinder: BAUSCH, Bruno, 86157 Augsburg (DE); BECHER, Daniel, 89584 Ehingen (DE); BÖSE, Olaf, 89081 Ulm (DE)
(74) Vertreter: Ter Meer Steinmeister & Partner
(86) Internationale Anmeldenummer: PCT/EP2022/083528
(87) Internationale Veröffentlichungsnummer: WO 2023/094666

(56) Entgegenhaltungen:
- WO-A1-2010/017169
- CN-A- 105 169 613
- CN-B- 105 140 427
- US-B2- 7 670 513

## Beschreibung

Die vorliegende Erfindung betrifft eine Barriere zur Abwendung der Propagation eines thermischen Ereignisses innerhalb eines mehrzelligen Batteriemoduls (sog. "Propagationsbarriere"), die eine hitzeabsorbierende Schutzschicht basierend auf einem Hydrogel und einem verstärkenden Füllmaterial umfasst. Des Weiteren bezieht sich die Erfindung auf ein Batteriemodul, welches die Barriere umfasst und auf die Verwendung der Barriere zur Kompensation von Volumenschwankungen innerhalb eines Batteriemoduls. Außerdem wird auch ein Verfahren zur Herstellung der Propagationsbarriere angegeben.

### Technischer Hintergrund und Stand der Technik

Thermische Ereignisse können grundsätzlich in allen Batterietypen vorkommen. Eines der am meisten gefürchteten thermischen Ereignisse ist das thermische Durchgehen einer Batterie (besser bekannt unter dem englischen Begriff "thermal runaway"). Dazu kann es kommen, wenn die Geschwindigkeit, mit der die Batterie Wärme erzeugt, die Geschwindigkeit übersteigt, mit der die Wärme abgeführt werden kann. Wird hierbei eine kritische Temperatur überschritten, kommt es dazu, dass sich der im Inneren der Batterie ablaufende Wärme produzierende Prozess selbst verstärkt und sich die Batterie innerhalb kürzester Zeit auf mehrere hundert Grad Celsius erhitzt. Gleichzeitig kommt es zu einem extremen Druckanstieg in der Zelle, welcher ein explosionsartiges Austreten von Zersetzungsgasen und einen Brand zur Folge haben kann.

In mehrzelligen Batteriemodulen ist die Gefahr, die von einem solchen thermischen Ereignis ausgeht, potenziert. Der Abstand zwischen den einzelnen Zellen bietet keinen ausreichenden Schutz gegen eine Propagation des thermischen Durchgehens. Aufgrund der hohen Temperatur, die sich bei der vom thermischen Durchgehen betroffenen Zelle einstellt, erhitzen sich auch die angrenzenden Zellen über die kritische Temperatur hinaus. Dementsprechend kann das thermische Durchgehen einer einzigen Zelle leicht zu einer Zerstörung des kompletten Batteriemoduls führen.

Besonders anfällig für thermisches Durchgehen sind Lithium-Ionen-Batterien. Diese besitzen eine erheblich höhere Energiedichte als andere Batterietypen und können ggf. Zersetzungsgase mit einem großen Anteil an Sauerstoff freisetzen, was zu noch höheren Temperaturen im Fehlerfall führen kann. In Anwendungsfeldern, in denen der Platzbedarf des Batteriemoduls kritisch ist, sind viele Batteriehersteller dazu übergegangen, die Packungsdichte der Lithium-Ionen-Zellen bis auf das Äußerte zu erhöhen. Somit steht nur wenig Bauraum für Barrieren zur Abwendung der Propagation von thermischen Ereignissen zu Verfügung, was in vielen Fällen eine ungenügende thermische Isolierung zwischen den Zellen bewirkt.

Vor diesem Hintergrund werden im Stand der Technik unterschiedliche Barrierematerialien für Batterien vorgeschlagen.

Die WO 2010/017169 A1 beschäftigt sich ebenfalls mit dem Problem des thermischen Durchgehens von mehrzelligen Batteriepacks, insbesondere von Lithiumionen-Batteriepacks, und schlägt Strategien vor, wie die Übertragung eines thermischen Ereignisses von einer Batteriezelle auf eine benachbarte Batteriezelle verhindert werden kann. Hierfür wird eine Propagationsbarriere mit einem Hydrogel als hitzeabsorbierenden Material angegeben. Das Hydrogel wird in einer flexiblen Beutelverpackung oder einem formstabilen Container vorgehalten und in das Batteriemodul eingebracht. Die flexible Beutelverpackung passt sich an die Form der Batteriezellen an, um die Übertragung der Wärme von der Batteriezelle auf das Hydrogel zu gewährleisten. Der Container kann maßangefertigt werden, um ebenfalls einen Kontakt zu der Zelloberfläche herzustellen. Beides ist jedoch verbesserungswürdig. Das Element kann nur begrenzt als Barriere fungieren. In der Ausführungsform, in der das Hydrogel in einer Beutelverpackung vorgehalten wird, fehlt es an einem Abstandshalter zwischen den Zellen, der das thermische Durchgehen einer angrenzenden Zelle überdauern würde. Sobald das Wasser verdampft und das Matrixmaterial des Hydrogels zersetzt ist, können benachbarte Zellen in direkten Kontakt miteinander kommen. In der Ausführungsform, in der das Hydrogel in einem Container vorgehalten wird, sind die Zellen zwar nicht in direktem Kontakt miteinander, jedoch bilden die aus einem Vollmaterial gefertigten Containerwände eine Wärmebrücke, über welche sich das thermische Ereignis nach Verdampfen des im Hydrogel enthaltenen Wassers weiter ausbreiten kann.

Auch die CN 105 169 613 A empfiehlt die Verwendung von Hydrogel umfassend 0,5-40 Masseteile Hydrogelmaterial und mindestens 50 Masseteile Wasser in Lithiumbatterien. Genauer gesagt wird das Hydrogel hier auf Verpackungselementen der Lithiumbatterie aufgebracht.

### Aufgabe der Erfindung

Ausgehend von diesem Stand der Technik lag die Aufgabe der vorliegenden Erfindung in der Bereitstellung einer Barriere mit einem formstabilen hitzeabsorbierenden Material, das mindestens genauso effektiv in der Abwendung der Propagation eines thermischen Ereignisses innerhalb eines mehrzelligen Batteriemoduls ist, wie herkömmliche Barrieren. Insbesondere sollte eine Barriere entwickelt werden, die zusätzlich auch Dilatationseffekte von Batteriezellen wirkungsvoll ausgleichen kann. Darüber hinaus sollte ein entsprechendes Batteriemodul angegeben werden. Weiterhin hat sich die vorliegende Erfindung zum Ziel gesetzt, ein Verfahren zur Herstellung einer solchen Barriere anzugeben.

### Zusammenfassung der Erfindung

Diese Aufgabe wird durch die Barriere gemäß Anspruch 1, die Verwendung einer Barriere gemäß Anspruch 11, das Batteriemodul gemäß Anspruch 12 und das Verfahren gemäß Anspruch 14 gelöst.

Erfindungsgemäß wird eine Barriere zur Abwendung der Propagation eines thermischen Ereignisses innerhalb eines mehrzelligen Batteriemoduls bereitgestellt, umfassend eine hitzeabsorbierende Schutzschicht, die 70,0 - 97,5 Gew.-% eines Hydrogels und 2,5 - 30,0 Gew.-% eines verstärkenden Füllmaterials enthält, wobei das Hydrogel ein Matrixmaterial und Wasser umfasst und das verstärkende Füllmaterial in dem Hydrogel dispergiert ist und wobei das verstärkende Füllmaterial ein partikelförmiges Material ist.

Durch den hohen Anteil an Hydrogel kann die hitzeabsorbierende Schutzschicht besonders effektiv Wärme aufnehmen und benachbarte Zellen in dem Batteriemodul thermisch voneinander abschirmen. Je höher der Anteil des Hydrogels, desto höher auch die Wassermenge, die enthalten ist und die unter Hitzeentwicklung verdampft und desto besser die Wärmedissipation.

Unter einem verstärkenden Füllmaterial im Sinne der vorliegenden Erfindung wird ein partikelförmiges Material verstanden. Das partikelförmige Material kann schüttfähig und/oder rieselfähig vorliegen, insbesondere als Pulver oder Granulat. Dementsprechend fällt eine vorgeformte Struktur, beispielsweise eine Trägermatrix in Form einer Gitterstruktur und/oder Wabenstruktur, nicht unter den Begriff "verstärkendes Füllmaterial".

Die Anwesenheit von mindestens 2,5 Gew.-% eines verstärkenden Füllmaterials gewährleistet die Formstabilität der hitzeabsorbierenden Schutzschicht. Diese Formstabilität drückt sich insbesondere dadurch aus, dass die hitzeabsorbierende Schutzschicht selbsttragend ist. Gleichzeitig sorgt der Maximalanteil von 30 Gew.-% Füllmaterial dafür, dass noch eine gewisse Flexibilität der Schutzschicht erhalten bleibt.

Zudem kann das verstärkende Füllmaterial die Ausbildung von Wärmebrücken zwischen benachbarten Zellen in dem Batteriemodul verhindern. Durch die Dispergierung liegt das Füllmaterial statistisch verteilt in der hitzeabsorbierenden Schutzschicht vor und kann selbst nach Verdampfen des Wassers und Zersetzen des Matrixmaterials im Falle eines thermischen Ereignisses noch als Isolator zwischen benachbarten Zellen wirken.

In einer bevorzugten Ausführungsform enthält die hitzeabsorbierende Schutzschicht in der erfindungsgemäßen Barriere 70,0 - 95,0 Gew.-% eines Hydrogels und 5,0 - 30,0 Gew.-% eines verstärkenden Füllmaterials.

Der Zusatz von 5 bis 30 Gew.-% an verstärkendem Füllmaterial minimiert das Austreten von Wasser aus dem Hydrogel während der thermischen Zyklisierung (Einfrieren/Auftauen) der Barriere. Dadurch eignet sich die Barriere für die Anwendung in Batterien und Batteriemodulen, die im Außenbereich eingesetzt werden und winterlichen Verhältnissen ausgesetzt sind.

Insbesondere enthält die hitzeabsorbierende Schutzschicht in der erfindungsgemäßen Barriere 80,0 - 92,5 Gew.-% eines Hydrogels und 7,5 - 20,0 Gew.-% eines verstärkenden Füllmaterials.

Das verstärkende Füllmaterial besteht bevorzugt aus Partikeln mit einem Seitenverhältnis ("aspect ratio") im Bereich von 0,5 bis 10, wobei das Seitenverhältnis gemäß der ISO-Norm 9276-6 gemessen wird. Besonders bevorzugt besteht das verstärkende Füllmaterial aus sphärischen Partikeln.

In einer Ausführungsform sind die Partikel anorganische Partikel. Vorzugsweise weisen die Partikel eine mittlere Partikelgröße d₅₀ von 1 nm bis 5 mm, bevorzugt von 100 nm bis 5 mm, insbesondere von 1000 nm bis 2 mm auf, wobei die mittlere Partikelgröße d₅₀ gemäß der ISO-Norm 13320-1 gemessen wird.

Die hitzeabsorbierende Schutzschicht kann in einer wasserdampfundurchlässigen Folie eingewickelt oder eingeschlossen, beispielsweise eingeschweißt, sein. Anders als bei herkömmlichen Propagationsbarrieren ist die Verpackung in einer Folie aber nicht notwendig, um eine ungewollte Ausbreitung des Hydrogels zu verhindern. Die Folie soll die hitzeabsorbierende Schutzschicht lediglich vor langzeitigem Wasserverlust schützen, also dem Diffusionsverlust von Wasser entgegenwirken.

Die wasserdampfundurchlässige Folie ist bevorzugt eine Polymerfolie, eine Metallfolie oder ein Laminat der vorgenannten Folien, besonders bevorzugt mit einer Foliendicke von weniger als 0,3 mm, insbesondere von weniger als 0,2 mm. Die Polymerfolie kann beispielsweise aus der Gruppe bestehend aus Polyethylen (PE), Polypropylen (PP), Polyvinylidenfluorid (PVDF), Polychlortrifluorethylen (PCTFE), Polyphenylensulfid (PPS), Ethylen-Tetrafluorethylen-Copolymer (ETFE), Polyurethanen (PU), Polyamiden (PA), Polyestern, insbesondere Polyethylenterephthalat (PET), und Kombinationen hiervon ausgewählt sein. Die Metallfolie ist vorzugsweise eine Aluminiumfolie.

In einer vorteilhaften Ausführungsform besteht das Matrixmaterial zu mindestens 85 Gew.-% aus einem natürlichen Polymer. Das natürliche Polymer basiert bevorzugt auf biogenen Rohstoffen. Unter den Begriff "biogene Rohstoffe" im Sinne der vorliegenden Erfindung fallen organische Rohstoffe, die land- und forstwirtschaftlich erzeugt oder aus Bakterien-, Hefen-, Pilz- Aqua- oder Meereskulturen isoliert worden sind sowie organische Rohstoffe tierischer Herkunft, nämlich solche, die ohnehin als Nebenprodukt bei der Tierschlachtung anfallen und einer Verwertung bedürfen. Ferner sind "biogene Rohstoffe" im Sinne der vorliegenden Erfindung gemäß der DIN EN 13432 biologisch abbaubar. Den biogenen Rohstoffen gegenüber stehen fossile Rohstoffe und Energieträger auf petrochemischer Basis, unter anderem Stoffe, die durch chemische Syntheseverfahren gewonnen worden sind und/oder nicht biologisch abbaubar sind.

Bevorzugt besteht das Matrixmaterial zu mindestens 85 Gew.-% aus einem natürlichen Polymer ausgewählt aus der Gruppe bestehend aus Alginat, Agar-Agar, Stärke, Stärkederivaten, κ-Carrageenan, i-Carrageenan, Pektin, Gellan, Scleroglucan, und Kombinationen hiervon.

Obwohl Herkunft und Zusammensetzung der oben genannten Polysaccharide dem Fachmann bekannt sind, wird nachfolgend auf einzelne Polysaccharide näher eingegangen:
Alginat ist die Hauptstrukturkomponente der Zellwände von braunen Makroalgen. Es ist ein lineares Copolymer der Uronsäure β-D-Mannuronat (M) und ihres C-5-Epimers α-L-Guluronat (G), das homopolymere Blöcke aus 1,4-verknüpften aufeinanderfolgenden M-Einheiten (polyM) oder G-Einheiten (polyG) oder Blöcke aus alternierenden M- und G-Einheiten (polyMG) umfasst. Alginat kann in Form seiner Salze, z. B. Alkali- oder Erdalkalimetallsalze, oder in veresterter Form, z. B. in Form eines Alkylesters, z.B. eines Methylesters, vorliegen.

Agar-Agar wird ebenfalls aus den Zellwänden von Algen gewonnen, z.B. aus Blau- oder Rotalgen. Es entspricht im Wesentlichen einer Mischung der Polysaccharide Agarose und Agaropektin, wobei Agarose bevorzugt 60-80 Gew.-% der Mischung ausmacht. Agarose ist ein Polysaccharid aus D-Galactose und 3,6-Anhydro-L-Galactose, die glycosidisch miteinander verbunden sind. Agaropektin ist ein Polysaccharid aus β-1,4 und α-1-3 glycosidisch verknüpfter D-Galactose sowie 3,6-Anhydro-L-Galactose. Etwa jeder zehnte Galactose-Rest ist an O-6 mit Schwefelsäure verestert und enthält zusätzliche Sulfat-Reste. Agar-Agar ist ein ganz besonders bevorzugtes natürlich vorkommendes Geliermittel im Sinne der vorliegenden Erfindung. Grund dafür ist, dass ein auf Agar-Agar basierendes Hydrogel bei Temperaturen unterhalb von etwa 85°C formstabil ist und erst oberhalb dieser Temperatur Wasser abgibt.

κ-Carrageenan besteht aus sich wiederholenden Monomeren aus D-Galaktose-4-sulfat und 3,6-Anhydro-D-galaktose. i-Carrageenan unterscheidet sich von κ-Carrageenan nur darin, dass die 3,6-Anhydro-D-galaktose-Einheit in C-2-Position eine zusätzliche Sulfat-Gruppe trägt. Beide Carrageenane kommen in der Natur als Grundsubstanz der Zellwände bei einer Vielzahl von Rotalgen vor.

Gellan ist ein Polysaccharid umfassend eine Wiederholungseinheit, die aus einer Rhamnose-, einer Glucuronsäure- und zwei Glucose-Grundeinheiten, die mit Essigsäure und Glycerinsäure verestert sind, besteht. Es kann beispielsweise durch Fermentation von Kohlenhydraten durch den Bakterienstamm *Pseudomonas elodea* hergestellt werden.

Scleroglucan ist ein β-1,3-Glucan das im Durchschnitt an jedem dritten Zucker einen Glucoserest als Seitenkette trägt. Scleroglucan wird bevorzugt aus Pilzkulturen gewonnen.

Das Matrixmaterial der Hydrogels kann zu mindestens 85 Gew.-%, bevorzugt zu mindestens 95 Gew. %, besonders bevorzugt zu mindestens 99 Gew.-%, aus Calcium-Alginat bestehen.

Das Matrixmaterial kann weiterhin bis zu 15 Gew.-%, bevorzugt bis zu 5 Gew.-%, insbesondere bis zu 1 Gew.-%, eines Verdickungsmittels umfassen. Durch Hinzufügen eines Verdickungsmittels können die mechanischen Eigenschaften der hitzeabsorbierenden Schutzschicht in einem noch breiteren Bereich eingestellt werden. Insbesondere können Flexibilität bzw. Kompressibilität nach Belieben und mit Blick auf die Anforderungen in der jeweiligen Anwendung angepasst werden. Dies ist zum Beispiel vorteilhaft, um Dilatationseffekte der Batteriezellen, zu denen es während des Lade- und Entladevorgangs und durch Alterung kommen kann, zu kompensieren.

Das Verdickungsmittel ist bevorzugt ausgewählt aus der Gruppe bestehend aus Cellulosederivaten, insbesondere Hydroxyethylcellulose; Hydroxypropylcellulose; Hydroxypropylmethylcellulose und/oder Carboxycellulose, Guaran, Xanthan-Gummi oder Mischungen hiervon. Auch diese Materialien sind "biogene Rohstoffe" und sind Teil eines nachhaltigen Ansatzes zur Herstellung von Batterien. Insbesondere tragen sie dazu bei, die CO₂-Bilanz, die mit dem Produktionsprozess der Barriere verknüpft ist, zu verbessern.

Das verstärkende Füllmaterial ist vorzugsweise aus der Gruppe bestehend aus Hydroxylapatit, Calciumcarbonat, Calciumsulfat; Aluminiumoxid, Magnesiumoxid, Hydraten der vorgenannten Stoffe sowie Mischungen hiervon ausgewählt. Die vorgenannten Materialien haben eine geringe Wärmeleitfähigkeit und sind in geeigneten Partikelgrößen verfügbar. Für den Fall, dass Hydrate als Füllmaterialien verwendet werden, wird die hitzeabsorbierende Eigenschaft der Schutzschicht noch verstärkt, da auch das Kristallwasser Wärme aufnehmen und verdampfen kann.

Das Hydrogel kann 5 - 30 Gew.-% Matrixmaterial und 70 - 95 Gew.-% Wasser enthalten oder daraus bestehen. Besonders bevorzugt enthält oder besteht das Hydrogel aus 5 - 20 Gew.-% Matrixmaterial und 80 - 95 Gew.-% Wasser.

Die hitzeabsorbierende Schutzschicht weist eine Dicke von 0,25 - 10,0 mm, bevorzugt eine Dicke von 1,5 - 3,0 mm, insbesondere eine Dicke von 1,5 bis 2,5 mm, auf. Dadurch nimmt die Barriere möglichst wenig Raum in dem Batteriemodul ein und erfüllt trotzdem noch ihre Funktion, nämlich die Batteriezellen nach Einbau in ein Batteriemodul thermisch voneinander abzuschirmen.

Um die Kompressibilität weiter anzupassen, können Durchtrittsöffnungen in der der hitzeabsorbierenden Schutzschicht vorgesehen werden. In einem Zustand ohne äußere Krafteinwirkung auf die Propagationsbarriere sind die Durchtrittsöffnungen Aussparungen bzw. Löcher in der Schutzschicht, also Hohlräume, die nicht mit Material gefüllt sind. Bei Krafteinwirkung kann die Materialmischung, aus der die Schutzschicht besteht, in die Hohlräume der Durchtrittsöffnungen verdrängt werden. Dadurch ergibt sich eine hohe Kompressibilität der Schutzschicht im Vergleich zu einem Vollmaterial. Reversible und irreversible Volumenänderungen der in einem Batteriemodul enthaltenen Batteriezellen können kompensiert werden.

Der volumenmäßige Anteil der Durchtrittsöffnungen an der Schutzschicht beträgt bevorzugt zwischen 1% und 90%, weiter bevorzugt zwischen 8% und 80%, besonders bevorzugt zwischen 10% und 75%, insbesondere zwischen 20% und 60%.

Jede Durchtrittsöffnung weist bevorzugt eine Querschnittsfläche von 0,025 mm² - 50,0 mm², weiter bevorzugt von 0,5 mm² - 8,0 mm², insbesondere von 2,0 mm²- 5,0 mm², auf.

Die Querschnittsfläche kann - muss aber nicht - für alle Durchtrittsöffnungen identisch sein. Hier ist zu berücksichtigen, dass eine identische Querschnittsfläche aller Durchtrittsöffnungen den Herstellungsprozess womöglich vereinfachen kann.

Die Durchtrittsöffnungen können Querschnittsformen aufweisen, die ausgewählt sind aus der Gruppe bestehend aus kreisförmig, ellipsenförmig, superellipsenförmig, sternförmig, schlitzförmig, halbmondförmig, rautenförmig, polygonförmig und Kombinationen hiervon. Die Verwendung von nicht kreisförmigen Querschnitten führt zu spezifischen Kraft-Weg- bzw. Kraft-Kompressions-Kurven der Propagationsbarriere. Beispielsweise kann durch Verwendung von sternförmigen Durchtrittsöffnungen eine Kraft-Weg-Kurve realisiert werden, bei der unter sehr geringer Krafteinwirkung ein gewisses Kompressionslevel erreicht wird, dann aber erheblich mehr Kraft nötig ist, um die Barriere weiter zu komprimieren.

In einer bevorzugten Ausführungsform sind die Durchtrittsöffnungen ungleichmäßig verteilt, insbesondere so, dass in einem ersten Bereich, der näher zum Mittelpunkt der Propagationsbarriere als zu deren Rand ist, eine Flächendichte ρ₁ an Durchtrittsöffnungen vorliegt, und in einem zweiten Bereich, der näher zum Rand der Propagationsfolie als zu deren Mittelpunkt ist, eine Flächendichte ρ₂ an Durchtrittsöffnungen vorliegt, wobei ρ₁ ≠ ρ₂ gilt. Generell gilt, dass die Verteilung der Durchtrittsöffnungen in der Schutzschicht an den Aufbau und die Geometrie des Batteriemoduls angepasst sein sollte. Das bedeutet, dass die größere Flächendichte an Durchtrittsöffnungen dort vorliegt, wo die anliegenden Batteriezellen im Betrieb eine größere reversible und irreversible Dilatation aufweisen. Unter Flächendichte ist im Rahmen der vorliegenden Erfindung der Anteil der Querschnittsfläche von Durchtrittsöffnungen bezogen auf ein Flächenelement der Propagationsbarriere zu verstehen.

Des Weiteren kann der Querschnitt der Durchtrittsöffnungen über die Dicke der Schutzschicht konstant sein oder sich, alternativ, entweder verjüngen oder aufweiten.

Aus den obigen Ausführungen geht hervor, dass ein weiterer Aspekt der vorliegenden Erfindung die Verwendung der Barriere zur Kompensation von Volumenschwankungen innerhalb eines Batteriemoduls ist. Die Volumenschwankungen können auf reversibel Dilatationseffekte bei Lade- und Entladevorgängen zurückzuführen sein oder auf irreversible Dilatationseffekte durch Alterung der Batteriezellen.

Ebenso wird durch die Erfindung ein Batteriemodul umfassend mehrere Batteriezellen und mindestens eine der oben beschriebenen Barrieren bereitgestellt. Die Barriere ist in dem Batteriemodul bevorzugt zwischen zwei benachbarten Batteriezellen angeordnet.

Da Lithium-Ionen-Zellen besonders anfällig für thermisches Durchgehen sind, ist es weiterhin vorteilhaft, wenn die Batteriezellen in dem Batteriemodul Lithium-Ionen-Zellen sind.

Zuletzt gibt die Erfindung auch ein Verfahren zur Herstellung der erfindungsgemäßen Barriere an. Bei dem Verfahren wird zunächst eine hitzeabsorbierende Schutzschicht hergestellt, wobei die Herstellung der hitzeabsorbierenden Schutzschicht die folgenden Schritte i) - iii) umfasst:
i) Natrium-Alginat Pulver, ein verstärkendes Füllmaterial und Wasser werden gemischt, so dass eine dickflüssige Masse entsteht,
ii) die Masse wird auf eine ebene Fläche oder in eine Gießform mit planarem Boden gegossen, und
iii) die gegossene Masse wird mit einer calciumionenhaltigen Lösung benetzt oder in eine calciumionenhaltige Lösung getaucht.

Anschließend kann die ausgehärtete Masse abgetupft und in eine wasserdampfundurchlässige Folie eingewickelt und/oder eingeschweißt werden. Dieses Herstellungsverfahren ist einfach und benötigt keine kostenintensiven Hilfsmittel. Darüber hinaus ist das Verfahren mit einem geringen CO₂-Fußabdruck verbunden.

### Beschreibung der bevorzugten Ausführungsformen

Bevorzugte Ausführungsformen der Erfindung werden unter Bezugnahme auf die Figuren und das nachfolgende Beispiel näher erläutert, ohne die Erfindung darauf beschränken zu wollen. Insbesondere beschreibt das nachfolgende Beispiel nur einen Herstellungsweg für die erfindungsgemäßen Barrieren. Es ist davon auszugehen, dass eine industrielle Fertigung der Barrieren ebenfalls durch Extrusion möglich ist.

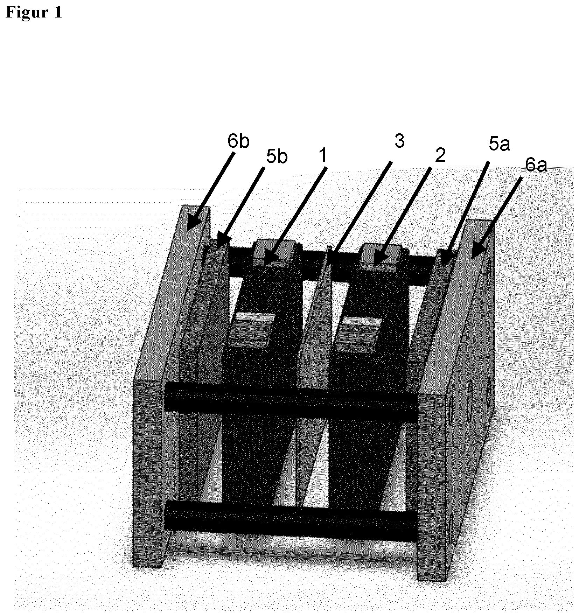

Figur 1 zeigt die Anordnung einer erfindungsgemäßen Barriere 3 in einem Batterie(-Test)-Modul umfassend zwei Batteriezellen 1 und 2. Bei 5a und 5b handelt es sich um eine thermische Isolation, welche nach dem proaktiven Auslösen des thermischen Ereignisses verhindert, dass ein Teil der freiwerdenden thermischen Energie von den Spannplatten 6a und 6b, die eine gewissen Wärmekapazität aufweisen, aufgenommen wird. Dadurch werden Messfehler vermieden. Die Spannplatten sorgen für den mechanischen Zusammenhalt des Moduls. Die Messstellen, an denen eine Temperaturmessung erfolgt, liegen auf Vorderseite und Rückseite jeder Zelle.

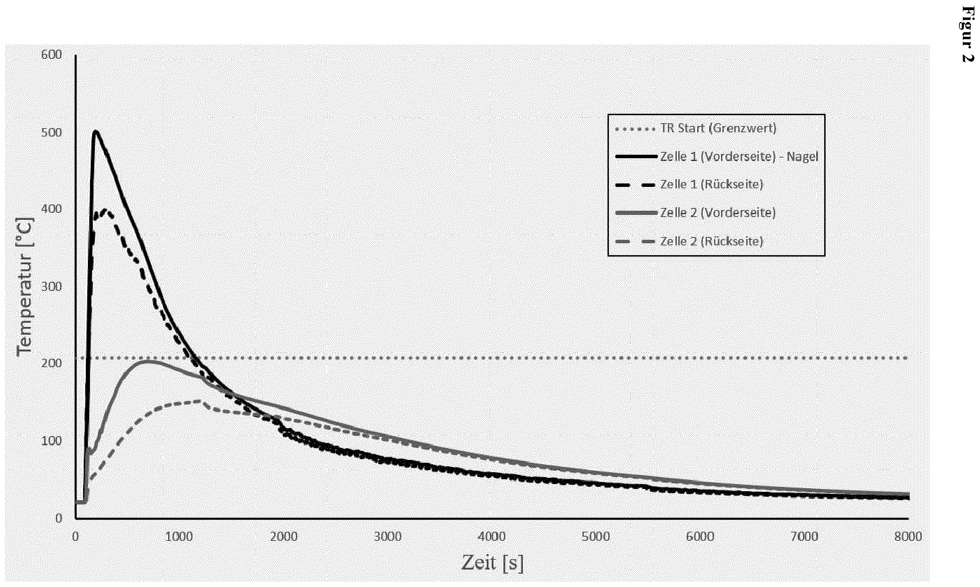

Figur 2 zeigt den Temperaturverlauf der Zellen 1 und 2 nach Nagelpenetration von Zelle 1. Aus dem Temperaturverlauf kann abgeleitet werden, dass die erfindungsgemäße Barriere 3 die Zelle 2 erfolgreich thermisch abschirmt. Dadurch wird verhindert, dass Zelle 2 die kritische Temperatur erreicht.

### Beispiel:

### 1) Herstellung der erfindungsgemäßen Barriere

80 Gew.-% Wasser, 15 Gew.-% Natrium-Alginat und 5 Gew.-% Füllmaterial (Calciumcarbonat) werden für etwa 3 Minuten gemischt. Die resultierende Mischung wird in einer flachen und offenen Form mit einer Dicke von etwa 2,3 mm aufgetragen. Die 2,3 mm dicke Mischung wird mit der Form für 30 Sekunden in eine wässrige CaCl₂-Lösung (5 Gew.-%) getaucht. Dadurch entsteht eine hitzeabsorbierende Schutzschicht umfassend ein flexibles, homogenes Hydrogel mit einer Dicke von 2,6 mm. Im Vergleich zu den Abmessungen der Form, in welcher die Mischung aufgetragen wurde, weist die hitzeabsorbierende Schutzschicht sowohl in der Länge als auch in der Breite eine Schrumpfung von etwa 5% auf. Die Schutzschicht enthält etwa 80 Gew.-% Wasser.

Zuletzt wird die Schutzschicht in eine wasserdampfundurchlässige Folie (Foliendicke 0,15 mm) eingeschweißt.

### 2) Test mit Nagelpenetration

Die hergestellte Barriere wurde in einen Zwischenraum zwischen zwei vollgeladenen, prismatischen NMC 111-Zellen mit 40 Ah platziert. Die Anordnung entspricht der Illustration in Figur 1. Anschließend wurde das thermische Durchgehen der Zelle 1 durch Penetration mit einem Nagel provoziert. Die Temperaturentwicklung an Vorder- und Rückseite beider Zellen wurde für eine Dauer von 7000 Sekunden gemessen und aufgezeichnet (siehe Fig. 2). Die Barriere verhinderte das Überspringen des thermischen Durchgehens von Zelle 1 auf die Zelle 2.

## Patentansprüche

1. Barriere zur Abwendung der Propagation eines thermischen Ereignisses innerhalb eines mehrzelligen Batteriemoduls, umfassend
eine hitzeabsorbierende Schutzschicht, die 70,0 - 97,5 Gew.-% eines Hydrogels und 2,5 - 30,0 Gew.-% eines verstärkenden Füllmaterials enthält,
wobei das Hydrogel ein Matrixmaterial und Wasser umfasst und das verstärkende Füllmaterial in dem Hydrogel dispergiert ist und wobei das verstärkende Füllmaterial ein partikelförmiges Material ist.

2. Barriere nach Anspruch 1, wobei die Schutzschicht in einer wasserdampfundurchlässigen Folie eingeschlossen ist, wobei die wasserdampfundurchlässige Folie bevorzugt eine Polymerfolie, eine Metallfolie oder ein Laminat der vorgenannten Folien ist, wobei die Polymerfolie weiter bevorzugt ausgewählt ist aus der Gruppe bestehend aus Polyethylen (PE), Polypropylen (PP), Polyvinylidenfluorid (PVDF), Polychlortrifluorethylen (PCTFE), Polyphenylensulfid (PPS), Ethylen-Tetrafluorethylen-Copolymer (ETFE), Polyurethanen (PU), Polyamiden (PA), Polyestern, insbesondere Polyethylenterephthalat (PET), und Kombinationen hiervon und wobei die Metallfolie weiter bevorzugt eine Aluminiumfolie ist.

3. Barriere nach Anspruch 1 oder 2, wobei das Matrixmaterial zu mindestens 85 Gew.-% aus einem natürlichen Polymer besteht, wobei das natürliche Polymer bevorzugt ausgewählt ist aus der Gruppe bestehend aus Alginat, Agar-Agar, Stärke, Stärkederivaten, κ-Carrageenan, i-Carrageenan, Pektin, Gellan, Scleroglucan, und Kombinationen hiervon.

4. Barriere nach einem der vorhergehenden Ansprüche, wobei das Matrixmaterial zu mindestens 85 Gew.-%, bevorzugt zu mindestens 95 Gew.-%, besonderes bevorzugt zu mindestens 99 Gew.-%, aus Calcium-Alginat besteht.

5. Barriere nach einem der vorhergehenden Ansprüche, wobei das Matrixmaterial weiterhin bis zu 15 Gew.-% eines Verdickungsmittels umfasst, wobei das Verdickungsmittel bevorzugt ausgewählt ist aus der Gruppe bestehend aus Cellulosederivaten, insbesondere Hydroxyethylcellulose; Hydroxypropylcellulose; Hydroxypropylmethylcellulose und/oder Carboxycellulose, Guaran, Xanthan-Gummi oder Mischungen hiervon.

6. Barriere nach einem der vorhergehenden Ansprüche, wobei das verstärkende Füllmaterial ausgewählt ist aus der Gruppe bestehend aus Hydroxylapatit, Calciumcarbonat, Calciumsulfat; Aluminiumoxid, Magnesiumoxid, Hydraten der vorgenannten Stoffe sowie Mischungen hiervon.

7. Barriere nach einem der vorhergehenden Ansprüche, wobei das Hydrogel 5 - 30 Gew.-% des Matrixmaterials und 70 - 95 Gew.-% Wasser enthält.

8. Barriere nach einem der vorhergehenden Ansprüche, wobei die Schutzschicht eine Dicke von 0,25 - 10,0 mm, bevorzugt eine Dicke von 1,5 - 3,0 mm, aufweist.

9. Barriere nach einem der vorhergehenden Ansprüche, wobei die hitzeabsorbierende Schutzschicht Durchtrittsöffnungen aufweist, wobei der volumenmäßige Anteil der Durchtrittsöffnungen an der Schutzschicht bevorzugt zwischen 1% und 90%, weiter bevorzugt zwischen 8% und 80%, besonders bevorzugt zwischen 10% und 75%, insbesondere zwischen 20% und 60%, beträgt.

10. Barriere nach einem der vorhergehenden Ansprüche, wobei die hitzeabsorbierende Schutzschicht Durchtrittsöffnungen aufweist, wobei jede Durchtrittsöffnung bevorzugt eine Querschnittsfläche von 0,025 mm² - 50,0 mm², weiter bevorzugt von 0,5 mm² - 8,0 mm², insbesondere von 2,0 mm² - 5,0 mm², aufweist.

11. Verwendung einer Barriere nach einem der Ansprüche 9 und 10 zur Kompensation von Volumenschwankungen innerhalb eines Batteriemoduls.

12. Batteriemodul umfassend mehrere Batteriezellen und mindestens eine Barriere nach einem der Ansprüche 1 bis 10, wobei die Barriere zwischen zwei benachbarten Batteriezellen angeordnet ist.

13. Batteriemodul gemäß Anspruch 12, wobei die Batteriezellen Lithium-Ionen-Zellen sind.

14. Verfahren zur Herstellung einer Barriere nach einem der Ansprüche 1 bis 10, bei dem eine hitzeabsorbierende Schutzschicht hergestellt wird, indem
i) Natrium-Alginat Pulver, ein verstärkendes Füllmaterial und Wasser gemischt werden, so dass eine dickflüssige Masse entsteht,
ii) die Masse auf eine ebene Fläche oder in eine Gießform mit planarem Boden gegossen wird, und
iii) die gegossene Masse mit einer calciumionenhaltigen Lösung benetzt oder in eine calciumionenhaltige Lösung getaucht wird.

## Claims

1. A barrier for preventing propagation of a thermal event within a multi-cell battery module, comprising
a heat-absorbing protective layer containing 70.0 - 97.5% by weight hydrogel and 2.5 - 30.0% by weight reinforcing filling material,
wherein the hydrogel comprises a matrix material and water and the reinforcing filling material is dispersed in the hydrogel and wherein the reinforcing filling material is a particle-shaped material.

2. The barrier according to claim 1, wherein the protective layer is enclosed in a foil impermeable to water vapor, the foil impermeable to water vapor preferably being a polymer foil, a metal foil or a laminate of the aforementioned foils, wherein the polymer foil is more preferably selected from the group consisting of polyethylene (PE), polypropylene (PP), polyvinylidene fluoride (PVDF), polychlorotrifluoroethylene (PCTFE), polyphenylene sulfide (PPS), ethylene-tetrafluoroethylene copolymer (ETFE), polyurethanes (PU), polyamides (PA), polyesters, in particular polyethylene terephthalate (PET), and combinations thereof and more preferably wherein the metal foil is aluminum foil.

3. The barrier according to claim 1 or 2, wherein the matrix material consists of at least 85 % by weight natural polymer, wherein said natural polymer is preferably selected from the group consisting of alginate, agar-agar, starch, starch derivatives, κ-carrageenan, i-carrageenan, pectin, gellan, scleroglucan, and combinations thereof.

4. The barrier according to one of the preceding claims, wherein the matrix material consists of at least 85% by weight, preferably at least 95 % by weight, particularly preferably at least 99% by weight, calcium alginate.

5. The barrier according to any one of the preceding claims, wherein the matrix material further comprises up to 15% by weight thickener, wherein the thickener is preferably selected from the group consisting of cellulose derivatives, in particular hydroxyethyl cellulose; hydroxypropyl cellulose; hydroxypropylmethylcellulose and/or carboxycellulose, guar gum, xanthan gum, or mixtures thereof.

6. The barrier according to any one of the preceding claims, wherein the reinforcing filling material is selected from the group consisting of hydroxyapatite, calcium carbonate, calcium sulfate; aluminum oxide, magnesium oxide, hydrates of the aforementioned substances, and mixtures thereof.

7. The barrier according to any one of the preceding claims, wherein the hydrogel contains 5 - 30 % by weight matrix material and 70 - 95% by weight water.

8. The barrier according to any one of the preceding claims, wherein the protective layer has a thickness of 0.25-10.0 mm, preferably a thickness of 1.5-3.0 mm.

9. The barrier according to any one of the preceding claims, wherein the heat-absorbing protective layer has passage openings, wherein the volume proportion of the passage openings in the protective layer is preferably between 1% and 90%, more preferably between 8% and 80%, particularly preferably between 10% and 75%, in particular between 20% and 60%.

10. The barrier according to any one of the preceding claims, wherein the heat-absorbing protective layer has passage openings, wherein each passage opening preferably has a cross-sectional area of 0.025 mm²-50.0 mm², more preferably of 0.5 mm²-8.0 mm², in particular of 2.0 mm²-5.0 mm².

11. Use of a barrier according to any one of claims 9 and 10 for compensating for volume fluctuations within a battery module.

12. A battery module comprising a plurality of battery cells and at least one barrier according to any one of claims 1 to 10, wherein the barrier is arranged between two adjacent battery cells.

13. The battery module according to claim 12, wherein the battery cells are lithium-ion cells.

14. A method of manufacturing a barrier according to any one of claims 1 to 10, in which a heat-absorbing protective layer is produced by
i) mixing sodium alginate powder, a reinforcing filling material and water to form a viscous mass,
ii) pouring the mass onto a flat surface or into a mold with a planar bottom, and
iii) wetting the cast mass with a solution containing calcium ions or immersing it in a solution containing calcium ions.

## Revendications

1. Barrière destinée à éviter la propagation d'un événement thermique à l'intérieur d'un module de batterie à plusieurs éléments, comprenant :
une couche de protection absorbant la chaleur qui contient 70,0 à 97,5 % en poids d'un hydrogel et 2,5 à 30 % en poids d'un matériau de remplissage et de renforcement,
dans laquelle l'hydrogel comprend un matériau de matrice et de l'eau, et le matériau de remplissage et de renforcement est dispersé dans l'hydrogel, et dans laquelle le matériau de remplissage et de renforcement est un matériau particulaire.

2. Barrière selon la revendication 1, dans laquelle la couche de protection est enfermée dans un film imperméable à la vapeur d'eau, dans laquelle le film imperméable à la vapeur d'eau est de préférence un film polymère, un film métallique ou un stratifié des films précédents, dans laquelle le film polymère est choisi de manière plus préférée parmi le groupe constitué d'un polyéthylène (PE), d'un polypropylène (PP), d'un polyfluorure de vinylidène (PVDF), d'un polychlorotrifluoroéthylène (PCTFE), d'un polysulfure de phénylène (PPS), d'un copolymère d'éthylène-tétrafluoroéthylène (ETFE), d'un polyuréthane (PU), de polyamides (PA), de polyesters, en particulier d'un polyéthylène téréphtalate (PET) et de combinaisons de ceux-ci, et dans laquelle le film métallique est de manière plus préférée un film d'aluminium.

3. Barrière selon la revendication 1 ou 2, dans laquelle le matériau de matrice est constitué d'au moins 85 % en poids d'un polymère naturel, dans laquelle le polymère naturel est de préférence choisi parmi le groupe constitué d'alginate, d'agar-agar, d'amidon, de dérivés d'amidon, de κ-carraghénine, de i-carraghénine, de pectine, de gellane, de scléroglucane et de combinaisons de ceux-ci.

4. Barrière selon l'une des revendications précédentes, dans laquelle le matériau de matrice est constitué d'au moins 85 % en poids, de manière préférée d'au moins 95 % en poids, de manière particulièrement préférée d'au moins 99 % en poids, d'alginate de calcium.

5. Barrière selon l'une des revendications précédentes, dans laquelle le matériau de matrice comprend en outre jusqu'à 15 % en poids d'un agent épaississant, dans laquelle l'agent épaississant est de préférence choisi parmi le groupe constitué de dérivés de cellulose, en particulier d'hydroxyéthylcellulose, d'hydroxypropylcellulose, d'hydroxypropylméthylcellulose et/ou de carboxycellulose, de guarane, de gomme de xanthane ou de mélanges de ceux-ci.

6. Barrière selon l'une des revendications précédentes, dans laquelle le matériau de remplissage et de renforcement est choisi parmi le groupe constitué d'hydroxyapatite, de carbonate de calcium, de sulfate de calcium, d'oxyde d'aluminium, d'oxyde de magnésium, d'hydrates des substances précédentes ainsi que de mélanges de ceux-ci.

7. Barrière selon l'une des revendications précédentes, dans laquelle l'hydrogel contient 5 à 30 % en poids du matériau de matrice et 70 à 95 % en poids d'eau.

8. Barrière selon l'une des revendications précédentes, dans laquelle la couche de protection a une épaisseur de 0,25 à 10,0 mm, de préférence une épaisseur de 1,5 à 3,0 mm.

9. Barrière selon l'une des revendications précédentes, dans laquelle la couche de protection absorbant la chaleur comporte des orifices de passage, dans laquelle la proportion en volume des orifices de passage sur la couche de protection est comprise de manière préférée entre 1 % et 90 %, de manière plus préférée entre 8 % et 80 %, de manière particulièrement préférée entre 10 % et 75 %, en particulier entre 20 % et 60 %.

10. Barrière selon l'une des revendications précédentes, dans laquelle la couche de protection absorbant la chaleur comporte des orifices de passage, dans laquelle chaque orifice de passage a de manière préférée une surface de section transversale de 0,025 mm ² à 50,0 mm² , de manière plus préférée de 0,5 mm ² à 8,0 mm ², en particulier de 2,0 mm ² à 5,0 mm².

11. Utilisation d'une barrière selon l'une des revendications 9 et 10 pour compenser des variations de volume à l'intérieur d'un module de batterie.

12. Module de batterie comprenant plusieurs éléments de batterie et au moins une barrière selon l'une des revendications 1 à 10, dans lequel la barrière est agencée entre deux éléments de batterie adjacents.

13. Module de batterie selon la revendication 12, dans lequel les éléments de batterie sont des éléments lithium-ion.

14. Procédé pour fabriquer une barrière selon l'une des revendications 1 à 10, dans lequel une couche de protection absorbant la chaleur est fabriquée par les étapes consistant à :
i) mélanger une poudre d'alginate de sodium, un matériau de remplissage et de renforcement et de l'eau de manière à former une masse visqueuse,
ii) verser la masse sur une surface plane ou dans un moule à fond plat, et
iii) mouiller la masse coulée avec une solution contenant des ions calcium ou l'immerger dans une solution contenant des ions calcium.
